# EUROPÄISCHE PATENTSCHRIFT

(11) **EP 2 942 504 B1**
(45) Veröffentlichungstag und Bekanntmachung des Hinweises auf die Patenterteilung: **07.11.2018**
(21) Anmeldenummer: 14171056.6
(22) Anmeldetag: 04.06.2014
(51) Int. Cl.: F01N 3/20, F01N 13/00, F02B 25/06, F02B 37/00, F02B 37/007, F02D 19/06

(54) **Hubkolbenbrennkraftmaschine sowie Verfahren zum Betreiben einer Hubkolbenbrennkraftmaschine**
Reciprocating internal combustion engine and method for operating a reciprocating internal combustion engine
Moteur à combustion interne à piston élévateur et procédé de fonctionnement d'un moteur à combustion interne à piston élévateur

(30) Priorität: 09.05.2014 EP 14167773
(43) Veröffentlichungstag der Anmeldung: 11.11.2015
(73) Patentinhaber: Winterthur Gas & Diesel AG, 8401 Winterthur (CH)
(72) Erfinder: Peitz, Daniel, 5313 Klingnau (CH)
(74) Vertreter: Intellectual Property Services GmbH

(56) Entgegenhaltungen:
- EP-A1- 0 808 999
- EP-A1- 2 628 922
- EP-A2- 0 417 412
- WO-A1-2012/123634

## Beschreibung

Die Erfindung betrifft eine Hubkolbenbrennkraftmaschine, im Speziellen einen längsgespülten Zweitakt-Grossdieselmotor mit einer Abgasaufbereitung, sowie ein Verfahren zum Betreiben einer Hubkolbenbrennkraftmaschine gemäss dem Oberbegriff des unabhängigen Anspruchs der jeweiligen Kategorie.

In der Praxis besteht bereits seit langem das Bedürfnis nach sogenannten "Dual Fuel" Motoren, also Motoren, die mit zwei unterschiedlichen Treibstoffen betrieben werden können. Dabei soll häufig einerseits Gas, z.B. in Form eines Erdgases, beispielsweise ein sogenanntes "liquefied natural gas" (LNG), oder ein Gas in Form eines Autogases und eines anderen zum Antrieb einer Brennkraftmaschine geeigneten Gases verbrannt werden, und andererseits soll auch noch ein anderer Treibstoff wie Benzin, Diesel, Schweröl oder ein anderer geeigneter flüssiger Treibstoff in ein und demselben Motor verbrannt werden können. Die Motoren können dabei sowohl Zweitakt- als auch Viertaktmotoren sein und es kann sich dabei um kleine, mittelgrosse aber auch um Grossmotoren, insbesondere auch um längsgespülte Zweitakt-Grossdieselmotoren handeln, wie sie zum Beispiel als Antriebsaggregate in Schiffen verwendet werden oder auch zur Herstellung elektrischer Energie in Kraftwerken häufig eingesetzt werden.

In diesem Zusammenhang ist die immer wichtiger werdende Reinigung der Abgase mit Hilfe von Abgaskatalysatoren grundsätzlich eine besondere technische Herausforderung, weil die aus der Verbrennung der verschiedenen Treibstoffe resultierenden Abgase unterschiedliche Wirkungen auf ein und denselben Abgaskatalysator haben können. So ist es zum Beispiel möglich, dass ein bestimmter Katalysator für eine Treibstoffart, z.B. für Gas optimiert ist und die Abgase des verbrannten Gas-Treibstoffes optimal reinigt, gleichzeitig aber für den alternativ zu verwendeten Treibstoff, z.B. für Diesel mehr oder weniger unbrauchbar ist oder von den Dieselabgasen sogar beschädigt werden kann oder mit der Zeit unbrauchbar werden kann.

Beispielweise Zweitakt Dual-Fuel Grossmotoren können in der Praxis oft mit Schweröl oder Diesel einerseits und anderseits mit Gas, z.B. mit dem oben erwähnten LNG, das bei unvollständiger Verbrennung zu einem hohen CH₄-Schlupf führen kann. Wenn ein entsprechender Motor nun mit Gas, also in einem Gasmodus betrieben wird, können die bei der Verbrennung entstehenden Abgase unter anderem eine nicht unerhebliche Menge Methan und / oder Formaldehyd Emissionen enthalten, die zum Beispiel aus einer spontanen Abkühlung der Verbrennungsflamme ("flame quenching") beim Verbrennungsvorgang an der Zylinderwand resultieren können oder in einer Phase frei werden können, in der die Spülung des Zylinders mit Frischluft bei gleichzeitig nicht geschlossenem Auslassventil stattfindet oder in anderer Weise frei werden können. Wenn die Methan Konzentration im Abgas entsprechend hoch ist, kann dadurch der sichere Betrieb des Motors beeinträchtigt werden. Zum Beispiel besteht die Gefahr, dass sich das Methan im Abgassystem, z.B. im Abgassammelrohr bzw. in einem Bereich vor oder gar im Turbolader entzündet. Im schlimmsten Fall kann die Entzündung des Methan im Abgassystem zur Beschädigung entsprechender Komponenten führen, die den schädlichen Wirkungen der Methangasentzündung ausgesetzt sind. Ausserdem ist Methan ein überaus wirksames Triebhausgas, das bekannterweise mindestens 25 mal wirksamer ist als Kohlendioxid, was einen signifikanten negativen Einfluss auf die Berechnung des sogenannten "Energy Efficiency Design Index" (EEDI) haben kann.

Daher ist es bei reinen Gasmotoren seit langem bekannt Oxidationskatalysatoren einzusetzen, welche zumindest die Methan und / oder Formaldehyd Emissionen reduzieren und damit nicht nur die Umwelt schonen sondern zum Beispiel auch verhindern, dass sich Methan im Abgassystem zu stark anreichert, so dass diese Katalysatoren auch verhindern, dass sich Methan im Abgassystem entzünden kann so dass durch diese Katalysatoren die erwähnten möglichen Schäden an den Komponenten des Abgassystems ebenfalls vermieden werden. Ein solcher reiner Gasmotor ist beispielweise in der WO 2010 147071 A1 angegeben. Weiterer Stand der Technik findet sich z.B. in der DE 10 2010 005814 A1 oder in der WO 2012/123 634 A1.

Allerdings sind solche Oxidationskatalysatoren meist sehr empfindlich und können durch andere Abgase als diejenigen, für die sie vorgesehen sind, erheblich beschädigt werden. Wenn beispielweise ein Oxidationskatalysator des reinen Gasmotors gemäss WO 2010 147071 A1 mit einem Abgas von verbranntem Diesel oder gar mit den Abgasen aus der Verbrennung von Schweröl beaufschlagt würde, wäre dieser bereits nach kurzer Zeit durch die vor allem chemisch sehr aggressiven Bestandteile dieser Abgase irreparabel beschädigt, wodurch der weitere sichere und zuverlässige Betrieb des Motors zumindest in Frage gestellt wäre, im schlimmsten Fall verunmöglicht würde. Allein schon aus diesem Grund ist ein Katalysator wie am reinen AGN Gasmotor gemäss WO 2010 147071 A1 für einen Dual Fuel Betrieb, also für einen alternativen Betrieb mit beispielweise Gas einerseits und Diesel oder gar Schweröl anderseits grundsätzlich ungeeignet.

Insbesondere, aber nicht nur beim Betrieb von Grossdieselmotoren in Schiffen ist aber gerade die zuvor erwähnte alternative Nutzung von Gas einerseits und Diesel bzw. Schweröl andererseits aus verschiedenen Gründen in der Praxis wünschenswert, so dass vermehrt das Bedürfnis nach einem Verbrennungsmotor besteht, der je nach Anforderungen alternativ mit Gas, insbesondere mit LNG einerseits, aber auch mit Diesel, häufig mit Schweröl andererseits betrieben werden kann, wobei gleichzeitig die oben beschriebenen schädlichen Wirkungen, insbesondere durch Methan oder Formaldehyd vermieden werden müssen.

In der EP 0 417 412 A2 wird eine Abgasanlage eines Verbrennungsmotors vorgeschlagen, bei welcher ein Startkatalysator sowie ein nachgeschalteter Hauptkatalysator vorgesehen sind. Beim Starten des Motors werden die Abgase durch Schliessen eines Zentralkanals durch den Startkatalysator zum Hauptkatalysator geleitet. Nach dem Warmlaufen des Motors wird der Zentralkanal geöffnet, sodass die Abgase hauptsächlich durch den Zentralkanal, und teilweise durch den Startkatalysator zum Hauptkatalysator gelangen.

Die Aufgabe der Erfindung ist es daher eine Hubkolbenbrennkraftmaschine zur Verfügung zu stellen, die alternativ einerseits mit einem Gas und anderseits mit einem anderen Brennstoff, insbesondere mit einem anderen Flüssigbrennstoff wie Diesel oder Schweröl betrieben werden kann, wobei beim Betrieb mit Gas die aus dem Stand der Technik bekannten schädlichen Wirkungen des Methan und / oder des Formaldehyd und oder anderer Bestandteile durch Einsatz eines Oxidationskatalysators ausgeschlossen sind. Alternativ muss aber auch ein Betrieb mit einem anderen Treibstoff wie Diesel oder Schweröl möglich sein, ohne dass der Oxidationskatalysator beschädigt oder beeinträchtigt wird.

Die diese Aufgaben lösenden Gegenstände der Erfindung sind durch die Merkmale der unabhängigen Ansprüche 1 und 8 gekennzeichnet.

Die jeweiligen abhängigen Ansprüche beziehen sich auf besonders vorteilhafte Ausführungsformen der Erfindung.

Die Erfindung betrifft somit eine Hubkolbenbrennkraftmaschine, ausgestaltet als ein Dual-Fuel Motor, der sowohl mit Gas als auch mit einem flüssigen Brennstoff, insbesondere mit einem Gas und mit einem Dieselöl oder einem Schweröl betreibbar ist, umfassend einen Mehrzahl von Zylindern, wobei jeder Zylinder mit einem Auslassventil versehen ist, und einem einen Brennraum einseitig begrenzenden Kolben, der im Zylinder zwischen einem oberen Totpunkt und einem unteren Totpunkt hin- und herbewegbar angeordnet ist. Dabei ist ein Abgassammelrohr vorgesehen, welchem das Abgas aus allen Zylindern über das jeweilige Auslassventil zuführbar ist. Für jeden Zylinder ist eine Abgasaufbereitung umfassend einen Abgaskatalysator und eine Bypassleitung sowie eine Umschaltvorrichtung derart vorgesehen, dass das Abgas mittels der Umschaltvorrichtung alternativ über den Abgaskatalysator oder über die Bypassleitung aus dem Brennraum dem Abgassammelrohr zuführbar ist. Jede Abgasaufbereitung ist jeweils zwischen einem der Zylinder und dem Abgassammelrohr derart vorgesehen, dass das Abgas aus dem Brennraum über die Abgasaufbereitung dem Abgassammelrohr zuführbar ist.

Durch die erfindungsgemässe Ausgestaltung der Abgasaufbereitung umfassend den Abgaskatalysator und die Bypassleitung, die derart mit einer Umschaltvorrichtung zusammenwirken, dass das Abgas alternativ entweder über den Abgaskatalysator oder über die Bypassleitung am Abgaskatalysator vorbei aus dem Brennraum der Hubkolbenbrennkraftmaschine abführbar ist, ist es erstmals möglich, eine Hubkolbenbrennkraftmaschine mit einem Gas und alternativ mit einem anderen Brennstoff wie z.B. Diesel oder Schweröl zu betreiben und zu gewährleisten, dass beim Gasbetrieb der Methangehalt im Abgas auf einen vorgebbaren Wert signifikant reduzierbar ist, wobei gleichzeitig sichergestellt ist, dass beim Betrieb mit einem anderen Kraftstoff der Abgaskatalysator zur Reduzierung der Methanbelastung nicht beschädigt wird.

Das ist wie bereits erwähnt mit den bekannten Motoren nicht möglich. So betrifft z.B. die WO 2010 147071 A1 einen reinen Gasmotor mit homogener Kompressionszündung. Diese Motoren können nur mit reinem Gas betrieben werden, ohne alternativen Betrieb mit Diesel oder Schweröl und verwenden insbesondere auch keine Piloteinspritzung. Als direkte Konsequenz ist bei dem Motor gemäss WO 2010 147071 A1 der Katalysator im Abgassystem fest eingebaut, d.h. das Abgas aus dem Brennraum wird immer über den Katalysator abgeleitet, ohne dass dies negative Folgen hat. Würde ein solcher Motor jedoch beispielweise mit Diesel oder Schweröl betrieben werden, würde das die Beschädigung oder gar Zerstörung des Abgaskatalysators zur Folge haben, da bei dem Motor der WO 2010 147071 A1 der Katalysator nicht gegen die schädlichen Abgase beim Verbrennen von Diesel oder Schweröl geschützt werden kann.

Das ist erstmals durch die vorliegende Erfindung möglich, die eine Abgasaufbereitung mit Umschaltvorrichtung vorsieht, mit welcher z.B. durch den Einsatz steuerbarer Klappen das bei der Verbrennung von Diesel oder Schweröl entstehende Abgas unter Umgehung des Abgaskatalysators über die Bypassleitung aus dem Brennraum abführt.

In der Praxis umfasst eine erfindungsgemässe Hubkolbenbrennkraftmaschine eine Mehrzahl von Zylindern sowie das Abgassammelrohr, so dass das Abgas dem Abgassammelrohr aus allen Zylindern zuführbar ist.

Die Abgasaufbereitung ist zwischen dem Zylinder und dem Abgassammelrohr derart vorgesehen, dass das Abgas aus dem Brennraum über die Abgasaufbereitung dem Abgassammelrohr zuführbar ist. D.h., der Abgaskatalysator wird besonders vorteilhaft im Hochdruckbereich des Abgassystems, also vor dem Abgasturbolader vorgesehen, besonders bevorzugt möglichst in der Nähe des Auslassventils, also wie erwähnt zwischen Zylinder und Abgassammelrohr. Der Einbau des Abgaskatalysators im Hochdruckbereich ermöglicht nämlich unter anderem eine deutlich verkleinerte Bauform des Abgaskatalysators, was auf Grund der kleineren Bauform neben weiteren Vorteilen alleine schon zu Materialeinsparung und damit zu massiv kleineren Kosten für die Herstellung des Abgaskatalysators selbst führt. Durch die Umsetzung des Methan- und Formaldehyds in einer exothermen Reaktion auf dem Katalysator wird insbesondere auch die Effizienz des Abgasturboladers erhöht, was natürlich an sich bereits ein ganz besonderer Vorteil ist, da so zumindest teilweise eine Leistungsreduktion kompensiert wird, die leider häufig beim Betrieb mit Gas in der Praxis zu beobachten ist.

Dabei ist es selbstverständlich auch möglich, dass z.B. aus Kostengründen oder aus rein geometrischen oder aus anderen speziellen Erfordernissen heraus ein und dieselbe Abgasaufbereitung mindestens zwei Zylindern gleichzeitig zugeordnet wird.

In der Praxis ist die Hubkolbenbrennkraftmaschine meist ein Zweitaktmotor oder ein Viertaktmotor, im Speziellen ein längsgespülter Zweitakt-Grossdieselmotor.

Zur Aufbereitung der Abgase aus der Gasverbrennung ist der Abgaskatalysator ganz besonders bevorzugt ein Methanoxidationskatalysator, insbesondere ein Methanoxidationskatalysator mit welchem auch Formaldehyd oxidierbar ist, wobei der Methanoxidationskatalysator zur Verbesserung der Methanoxidation vorteilhaft, aber nicht unbedingt zwingend unter anderem Palladium umfasst. Es versteht sich, dass sich solche Katalysatoren in Aufbau und Zusammensetzung seiner chemisch wirksamen Elemente von solchen an sich bekannten Abgaskatalysatoren unterscheidet, die als Oxidationskatalysatoren für Dieselmotoren eingesetzt werden oder sich auch sehr deutlich von Katalysatoren unterscheiden, die zum Beispiel im Automobilbau für Gasmotoren verwendet werden, die auf Benzinmotoren basieren.

Der Abgaskatalysator kann sich in einer Gasdurchführung oder mehreren Gasdurchführungen auch innerhalb der Bypassleitung befinden und ist mittels der Umschaltvorrichtung zwischen den möglichen Abgasdurchflussmöglichkeiten umschaltbar. In einem anderen speziellen Ausführungsbeispiel kann sich die Bypassleitung in einer Gasdurchführung oder mehreren Gasdurchführungen innerhalb des Abgaskatalysators befinden und mittels der Umschaltvorrichtung kann der Abgasstrom zwischen den möglichen Abgasdurchflussmöglichkeiten geschaltet werden.

Der Einbau des Bypass innerhalb des Katalysators oder umgekehrt hat neben der besonders kompakten Bauform insbesondere auch den Vorteil, dass der Katalysator bereits vorgewärmt wird, auch wenn keine Abgase den Katalysator direkt durchströmen sondern durch die Bypassleitung am Abgaskatalysator vorbeiströmen.

Besonders bevorzugt umfasst die Umschaltvorrichtung wie bereits erwähnt eine steuerbare Klappe, so dass im Einbau- und Betriebszustand das Abgas alternativ durch den Abgaskatalysator oder durch die Bypassleitung umleitbar ist.

Schliesslich betrifft die Erfindung auch ein Verfahren zum Betreiben einer Hubkolbenbrennkraftmaschine, die in einem ersten Betriebszustand mit einem Gas in einem Gasmodus betrieben wird und in einem zweiten Betriebszustand in einem Flüssigmodus mit einem flüssigen Brennstoff, insbesondere mit einem Dieselöl oder einem Schweröl betrieben wird, umfassend eine Mehrzahl von Zylindern, wobei jeder Zylinder mit einem Auslassventil versehen ist, und einem einen Brennraum einseitig begrenzenden Kolben, der im Zylinder zwischen einem oberen Totpunkt und einem unteren Totpunkt hin- und herbewegbar angeordnet ist, wobei ein Abgassammelrohr vorgesehen ist, welchem das Abgas aus allen Zylindern über das jeweilige Auslassventil zugeführt wird, und wobei für jeden Zylinder eine Abgasaufbereitung umfassend einen Abgaskatalysator und eine Bypassleitung sowie eine Umschaltvorrichtung vorgesehen ist, und im Betriebszustand das Abgas mittels der Umschaltvorrichtung alternativ über den Abgaskatalysator oder über die Bypassleitung aus dem Brennraum dem Abgassammelrohr zugeführt wird, wobei jede Abgasaufbereitung jeweils zwischen einem der Zylinder und dem Abgassammelrohr derart vorgesehen ist, dass das Abgas aus dem Brennraum über die Abgasaufbereitung dem Abgassammelrohr zugeführt wird.

Bei einer für die Praxis besonders wichtigen Variante eines erfindungsgemässen Verfahrens ist die Hubkolbenbrennkraftmaschine ein Zweitakt-Motor oder ein Viertakt-Motor, im Speziellen ein längsgespülter Zweitakt-Grossdieselmotor. Die Hubkolbenbrennkraftmaschine wird in einem ersten Betriebszustand mit einem Gas in einem Gasmodus betrieben und wird in einem zweiten Betriebszustand in einem Flüssigmodus mit einem flüssigen Brennstoff, insbesondere mit einem Dieselöl oder einem Schweröl betrieben. Dabei wird als Abgaskatalysator besonders bevorzugt ein Methanoxidationskatalysator, insbesondere ein Methanoxidationskatalysator mit welchem auch Formaldehyd oxidiert werden kann verwendet. Das Abgas kann somit im Gasmodus mittels der Umschaltvorrichtung über den Abgaskatalysator geleitet werden und ein anderes Abgas kann im Flüssigmodus mittels der Umschaltvorrichtung über die Bypassleitung unter Umgehung des Abgaskatalysators geleitet werden.

Im Folgenden wird die Erfindung an Hand der schematischen Zeichnung näher erläutert. Es zeigt:
- Fig. 1: ein besonders bevorzugtes Ausführungsbeispiel einer erfindungsgemässen Hubkolbenbrennkraftmaschine;
- Fig. 2a: ein erstes Ausführungsbeispiel einer erfindungsgemässen Abgasaufbereitung;
- Fig. 2b: einen Schnitt entlang der Schnittlinie I-I gemäss Fig. 2a;
- Fig. 3a: ein zweites Ausführungsbeispiel einer erfindungsgemässen Abgasaufbereitung;
- Fig. 3b: einen Schnitt entlang der Schnittlinie II-II gemäss Fig. 3a;
- Fig. 4a: ein spezielles Ausführungsbeispiel gemässe Fig. 2a mit einer Mehrzahl von Abgaskatalysatoren;
- Fig. 4b: ein spezielles Ausführungsbeispiel gemäss Fig. 3a mit einer Mehrzahl von Bypassleitungen.

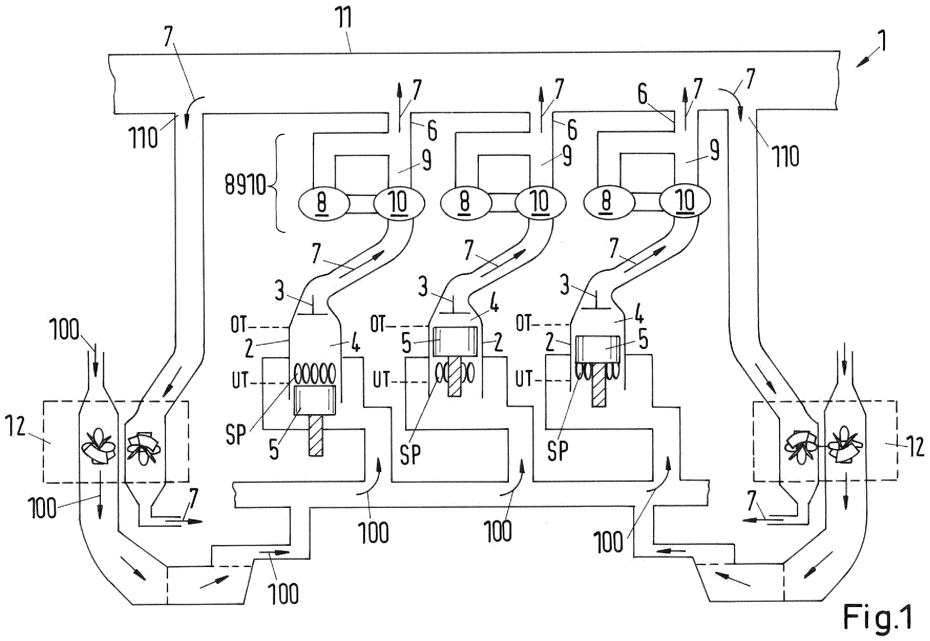

Fig. 1 zeigt in einer schematischen Darstellung zur Erläuterung des Zusammenwirkens der unterschiedlichen Komponenten den prinzipiellen Aufbau eines Motors mit Abgasturbolader Systems an einem speziellen Ausführungsbeispiel einer erfindungsgemässen Hubkolbenbrennkraftmaschine, die hier exemplarisch als Zweitakt-Grossdieselmotor mit Längsspülung ausgebildet ist und im Folgenden gesamthaft mit dem Bezugszeichen 1 bezeichnet wird.

Der abgesehen von der erfindungsgemässen Abgasaufbereitung 8910 an sich bekannte Zweitakt-Grossdieselmotor 1 umfasst in der Praxis üblicherweise mehrere Zylinder 2 mit einem in einem Zylinderdeckel angeordneten Auslassventil 3, in welchem Zylinder 2 ein Kolben 5 zwischen einem unteren Totpunkt UT und einem oberen Totpunkt OT entlang einer Lauffläche hin- und herbewegbar angeordnet ist. Die Zylinderwände des Zylinders 2 mit Zylinderdeckel und der Kolben 5 begrenzen in bekannter Weise einen Brennraum 4 des Zylinders 2. In einem Einlassbereich SP des Zylinders 2 sind mehrere Spülluftöffnungen vorgesehen, die als Spülschlitze ausgeführt sind. Je nach Stellung des Kolbens 5 werden die Spülschlitze von diesem überdeckt oder freigegeben. Durch die Spülluftöffnungen kann die oft auch als Ladeluft 100 bezeichnete Spülluft 100 in den Brennraum 4 des Zylinders 2 einströmen. Durch das im Zylinderdeckel angeordnete Auslassventil 3 strömen die bei der Verbrennung entstandenen Abgase 7 über ein Abgassammelrohr 11 schliesslich in einen Abgasturbolader 12.

Durch die Gasdosierventil im Zylinderkopf des Zylinders 2 wird das zu verbrennende Gas in den Brennraum eingebracht. Nach der Verdichtung des Gemischs aus Ladeluft 100 und Gas durch den Kolben 5 wird es durch eine Piloteinspritzung gezündet.

Der Grossdieselmotor 1 gemäss Fig. 1 ist dabei ein elektronisch gesteuerter Motor, so dass unter anderem der Öffnungswinkel und / oder der Schliesswinkel des Auslassventils 3 und / oder der Einspritzzeitpunkt und / oder die Einspritzmenge des Kraftstoffs und / oder andere wichtige Funktionen des Motors frei programmierbar steuerbar und / oder regelbar sind.

Gemäss der vorliegenden Erfindung ist zwischen dem Abgassammelrohr 11 und dem Auslassventil 3 eines jeden Zylinders 2 eine Abgasaufbereitung 8910 umfassend einen Abgaskatalysator 8 und eine Bypassleitung 9 sowie eine Umschaltvorrichtung 10 derart vorgesehen, dass das Abgas 7 mittels der Umschaltvorrichtung 10 alternativ über den Abgaskatalysator 8 oder über die Bypassleitung 9 aus dem Brennraum 4 der Abgasleitung 6 zuführbar ist, wobei das Abgassammelrohr 11 in an sich bekannter Weise derart ausgestaltet und am Motor vorgesehen ist, dass das Abgas 7 dem Abgassammelrohr 11 aus allen Zylindern 2 ein und demselben Abgassammelrohr 11 zuführbar ist.

Die Umschaltvorrichtung 10 umfasst dabei eine dem Fachmann an sich bekannte steuer- und oder regelbare Klappe, so dass das Abgas 7 alternativ durch den Abgaskatalysator 8 oder durch die Bypassleitung 9 umleitbar ist, was aus Gründen der Übersichtlichkeit in Fig. 1 nicht im Detail dargestellt ist. Bei dem für die Praxis besonders wichtigen Ausführungsbeispiel gem. Fig. 1 ist die Abgasaufbereitung 8910 im Hochdruckbereich des Abgassystems zwischen dem Zylinder 2 und dem Abgassammelrohr 11 derart ganz in der Nähe des Abgasauslasses am Zylinder 2, also ganz in der Nähe des Auslassventils 3 installiert, so dass die oben im allgemeinen bereits beschriebenen Vorteile ausgenutzt wurden, die eine Installation im Hochdruckbereich des Abgassystems mit sich bringen: der Abgaskatalysator 8 hat eine relativ kleine Baugrösse und durch die exotherme Reaktion im Abgaskatalysator wird die Effizienz des nachgeschalteten Abgasturboladers 12 zusätzlich gesteigert, wodurch ein allfälliger Effizienzverlust im Gasbetrieb des Motors zumindest teilweise wieder ausgeglichen werden kann. Die Hubkolbenbrennkraftmaschine 1 der Fig. 1 ist im Speziellen ein sogenannter Dual-Fuel Motor ist, der sowohl mit Gas als auch mit einem flüssigen Brennstoff, insbesondere mit einem Gas und mit einem Dieselöl oder einem Schweröl betreibbar ist, wobei der Abgaskatalysator 8 ein Methanoxidationskatalysator, insbesondere ein Methanoxidationskatalysator ist mit welchem auch Formaldehyd hervorragend oxidierbar ist und der Methanoxidationskatalysator zur weiteren Verbesserung und Optimierung der Methanoxidation insbesondere unter anderem auch Palladium umfasst.

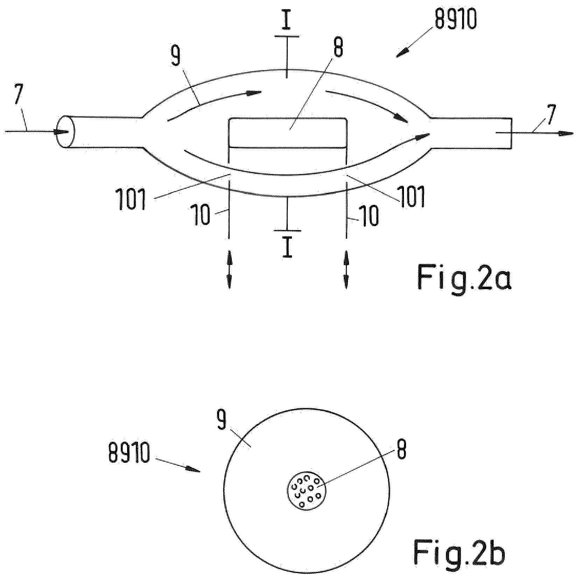

Anhand der Fig. 2a bzw. Fig. 2b wird ein erstes spezielles Ausführungsbeispiel einer erfindungsgemässen Abgasaufbereitung 8910 diskutiert, wobei die Fig. 2b einen Schnitt entlang der Schnittlinie I-I gemäss Fig. 2a zeigt. Hier handelt sich um ein erstes Ausführungsbeispiel einer besonders kompakten Bauform, bei welcher sich der Abgaskatalysator 8 in einer Gasdurchführung oder mehreren Gasdurchführungen innerhalb der Bypassleitung 9 befindet und mittels der Umschaltvorrichtung 10 zwischen den möglichen Abgasdurchflussmöglichkeiten umschaltbar ist. Dabei umfasst die Umschaltvorrichtung 10 eine steuerbare Klappe mit einer Öffnung 101, so dass das Abgas 7 alternativ durch die Öffnung 101 in den Abgaskatalysator 8 strömen kann oder durch die Bypassleitung 9 umleitbar ist, je nachdem ob die Öffnung 101 den Zugang zum Abgaskatalysator 8 freigibt oder dieser in einer anderen Stellung durch die steuerbare Klappe verschlossen ist.

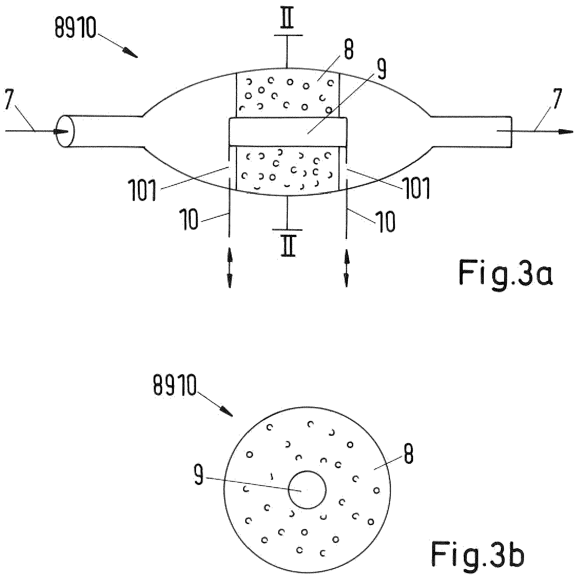

Die Fig. 3a bzw. 3b zeigen ein zweites Ausführungsbeispiel einer besonders kompakten Bauform einer erfindungsgemässen Abgasaufbereitung 8910, wobei Fig. 3b einen Schnitt entlang der Schnittlinie II-II gemäss Fig. 3a zeigt. Hier befindet sich die Bypassleitung 9 in einer Gasdurchführung oder mehreren Gasdurchführungen innerhalb des Abgaskatalysators 8 und es mittels der Umschaltvorrichtung 10 zwischen den möglichen Abgasdurchflussmöglichkeiten umgeschaltet werden. Dabei umfasst auch bei diesem Ausführungsbeispiel die Umschaltvorrichtung 10 eine steuerbare Klappe mit einer Öffnung 101, so dass das Abgas 7 alternativ durch die Öffnung 101 in den Abgaskatalysator 8 strömen kann oder durch die Bypassleitung 9 umleitbar ist, je nachdem ob die Öffnung 101 den Zugang zum Abgaskatalysator 8 freigibt oder dieser in einer anderen Stellung durch die steuerbare Klappe verschlossen ist.

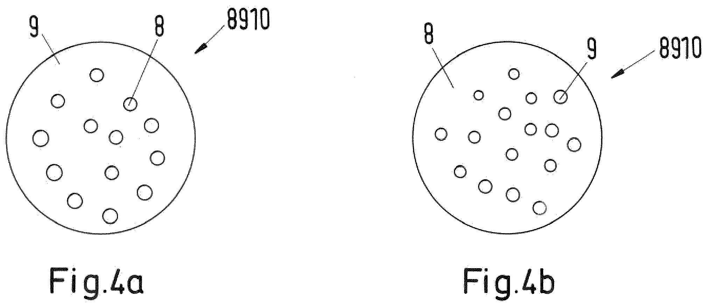

Die Fig. 4a und Fig. 4b zeigen schliesslich weitere Varianten der Ausführungsbeispiele gemäss der Fig. 2a und 2b, sowie Fig. 3a und Fig. 3b. Die Fig. 4a zeigt ein spezielles Ausführungsbeispiel gemässe Fig. 2a mit einer Mehrzahl von Abgaskatalysatoren 8 in ein und derselben Bypassleitung 9, wogegen Fig. 4b ein spezielles Ausführungsbeispiel gemäss Fig. 3a mit einer Mehrzahl von Bypassleitungen 9 innerhalb eines Abgaskatalysators 8 zeigt.

## Patentansprüche

1. Hubkolbenbrennkraftmaschine ausgestaltet als ein Dual-Fuel Motor, der sowohl mit Gas als auch mit einem flüssigen Brennstoff, insbesondere mit einem Gas und mit einem Dieselöl oder einem Schweröl betreibbar ist, umfassend eine Mehrzahl von Zylindern (2), wobei jeder Zylinder (2) mit einem Auslassventil (3) versehen ist, und einem einen Brennraum (4) einseitig begrenzenden Kolben (5), der im Zylinder (2) zwischen einem oberen Totpunkt (OT) und einem unteren Totpunkt (UT) hin- und herbewegbar angeordnet ist, wobei ein Abgassammelrohr (11) vorgesehen ist, welchem das Abgas (7) aus allen Zylindern (2) über das jeweilige Auslassventil (3) zuführbar ist, und wobei für jeden Zylinder (2) eine Abgasaufbereitung (8910) umfassend einen Abgaskatalysator (8) und eine Bypassleitung (9) sowie eine Umschaltvorrichtung (10) derart vorgesehen ist, dass das Abgas (7) mittels der Umschaltvorrichtung (10) alternativ über den Abgaskatalysator (8) oder über die Bypassleitung (9) aus dem Brennraum (4) dem Abgassammelrohr (11) zuführbar ist, **dadurch gekennzeichnet, dass** jede Abgasaufbereitung (8910) jeweils zwischen einem der Zylinder (2) und dem Abgassammelrohr (11) derart vorgesehen ist, dass das Abgas (7) aus dem Brennraum (4) über die Abgasaufbereitung (8910) dem Abgassammelrohr (11) zuführbar ist.

2. Hubkolbenbrennkraftmaschine nach Anspruch 1, wobei ein und dieselbe Abgasaufbereitung (8910) mindestens zwei Zylindern (2) gleichzeitig zugeordnet ist.

3. Hubkolbenbrennkraftmaschine nach einem der vorangehenden Ansprüche, wobei die Hubkolbenbrennkraftmaschine ein Zweitaktmotor oder ein Viertaktmotor, im Speziellen ein längsgespülter Zweitakt-Grossdieselmotor ist.

4. Hubkolbenbrennkraftmaschine nach einem der vorangehenden Ansprüche, wobei der Abgaskatalysator (8) ein Methanoxidationskatalysator, insbesondere ein Methanoxidationskatalysator mit welchem auch Formaldehyd oxidierbar ist.

5. Hubkolbenbrennkraftmaschine nach Anspruch 4, wobei der Methanoxidationskatalysator zur Verbesserung der Methanoxidation Palladium umfasst.

6. Hubkolbenbrennkraftmaschine nach einem der vorangehenden Ansprüche, wobei sich der Abgaskatalysator (8) in einer Gasdurchführung oder mehreren Gasdurchführungen innerhalb der Bypassleitung (9) befindet und mittels der Umschaltvorrichtung (10) zwischen den möglichen Abgasdurchflussmöglichkeiten umschaltbar ist und / oder wobei sich die Bypassleitung (9) in einer Gasdurchführung oder mehreren Gasdurchführungen innerhalb des Abgaskatalysators (8) befindet und mittels der Umschaltvorrichtung (10) zwischen den möglichen Abgasdurchflussmöglichkeiten umschaltbar ist.

7. Hubkolbenbrennkraftmaschine nach einem der vorangehenden Ansprüche, wobei die Umschaltvorrichtung (10) eine steuerbare Klappe umfasst, so dass das Abgas (7) alternativ durch den Abgaskatalysator (8) oder durch die Bypassleitung (9) umleitbar ist.

8. Verfahren zum Betreiben einer Hubkolbenbrennkraftmaschine (1), die in einem ersten Betriebszustand mit einem Gas in einem Gasmodus betrieben wird und in einem zweiten Betriebszustand in einem Flüssigmodus mit einem flüssigen Brennstoff, insbesondere mit einem Dieselöl oder einem Schweröl betrieben wird, umfassend eine Mehrzahl von Zylindern (2), wobei jeder Zylinder (2) mit einem Auslassventil (3) versehen ist, und einem einen Brennraum (4) einseitig begrenzenden Kolben (5), der im Zylinder (2) zwischen einem oberen Totpunkt (OT) und einem unteren Totpunkt (UT) hin- und herbewegbar angeordnet ist, wobei ein Abgassammelrohr (11) vorgesehen ist, welchem das Abgas (7) aus allen Zylindern (2) über das jeweilige Auslassventil (3) zugeführt wird, und wobei für jeden Zylinder (2) eine Abgasaufbereitung (8910) umfassend einen Abgaskatalysator (8) und eine Bypassleitung (9) sowie eine Umschaltvorrichtung (10) vorgesehen ist, und im Betriebszustand das Abgas (7) mittels der Umschaltvorrichtung (10) alternativ über den Abgaskatalysator (8) oder über die Bypassleitung (9) aus dem Brennraum (4) dem Abgassammelrohr (11) zugeführt wird, **dadurch gekennzeichnet, dass** jede Abgasaufbereitung (8910) jeweils zwischen einem der Zylinder (2) und dem Abgassammelrohr (11) derart vorgesehen ist, dass das Abgas (7) aus dem Brennraum (4) über die Abgasaufbereitung (8910) dem Abgassammelrohr (11) zugeführt wird.

9. Verfahren nach Anspruch 8, wobei die Hubkolbenbrennkraftmaschine (1) ein Zweitakt-Motor oder ein Viertakt-Motor, im Speziellen ein längsgespülter Zweitakt-Grossdieselmotor ist.

10. Verfahren nach Anspruch 8 oder 9, wobei das Abgas (7) im Gasmodus mittels der Umschaltvorrichtung (10) über den Abgaskatalysator (8) geleitet wird und im Flüssigmodus das Abgas (7) mittels der Umschaltvorrichtung (1) über die Bypassleitung (9) unter Umgehung des Abgaskatalysators (8) geleitet wird und / oder wobei als Abgaskatalysator (8) ein Methanoxidationskatalysator, insbesondere ein Methanoxidationskatalysator mit welchem auch Formaldehyd oxidiert werden kann verwendet wird.

## Claims

1. A reciprocating piston internal combustion engine, configured as a dual fuel engine, which can be operated both with gas and with a liquid fuel, in particular with a gas and with a diesel oil or a heavy fuel oil, comprising a plurality of cylinders (2), wherein each cylinder (2) is provided with an outlet valve (3) and with a piston (5), which bounds a combustion space (4) at one side, which piston is arranged movable to and fro in the cylinder (2) between a top dead center (OT) and a bottom dead center (UT), wherein an exhaust gas manifold (11) is provided to which the exhaust gas (7) can be supplied from all cylinders (2) via the respective outlet valve (3), and wherein an exhaust gas conditioning (8910) comprising a catalytic converter (8) and a bypass line (9) as well as a switchover device (10) is provided for each cylinder (2) such that the exhaust gas (7) can be supplied from the combustion space (4) to the exhaust gas manifold (11) alternatively via the catalytic converter (8) or via the bypass line (9) by means of the switchover device (10), **characterized in that** each exhaust gas conditioning (8910) is provided between one of the cylinders (2) and the exhaust gas manifold (11) such that the exhaust gas (7) can be supplied from the combustion space (4) to the exhaust gas manifold (11) via the exhaust gas conditioning (8910).

2. A reciprocating piston internal combustion engine in accordance with claim 1, wherein one and the same exhaust gas conditioning (8910) is simultaneously associated with at least two cylinders (2).

3. A reciprocating piston internal combustion engine in accordance with any one of the preceding claims, wherein the reciprocating piston internal combustion engine is a two-stroke engine or a four-stroke engine, in particular a large uniflow-scavenged two-stroke diesel engine.

4. A reciprocating piston internal combustion engine in accordance with any one of the preceding claims, wherein the catalytic converter (8) is a methane oxidation catalytic converter, in particular a methane oxidation catalytic converter with which formaldehyde can also be oxidized.

5. A reciprocating piston internal combustion engine in accordance with claim 4, wherein the methane oxidation catalytic converter comprises palladium to improve the methane oxidation.

6. A reciprocating piston internal combustion engine in accordance with any one of the preceding claims, wherein the catalytic converter (8) is located in a gas leadthrough or in a plurality of gas leadthroughs within the bypass line (9) and is switchable between the possible exhaust gas flow possibilities by means of the switchover device (10) and/or wherein the bypass line (9) is located in a gas leadthrough or in a plurality of gas leadthroughs within the catalytic converter (8) and is switchable between the possible exhaust gas flow possibilities by means of the switchover device (10).

7. A reciprocating piston internal combustion engine in accordance with any one of the preceding claims, wherein the switchover device (10) comprises a controllable valve such that the exhaust gas (7) can alternatively be diverted through the catalytic converter (6) or through the bypass line (9).

8. A method of operating a reciprocating piston internal combustion engine (1), which is operated with a gas in a gas mode in a first operating state and which is operated with a liquid fuel in a liquid mode in a second operating state, in particular with a diesel oil or a heavy fuel oil, comprising a plurality of cylinders (2), wherein each cylinder (2) is provided with an outlet valve (3) and with a piston (5), which bounds a combustion space (4) at one side, which piston is arranged movable to and fro in the cylinder (2) between a top dead center (OT) and a bottom dead center (UT), wherein an exhaust gas manifold (11) is provided to which the exhaust gas (7) is supplied from all cylinders (2) via the respective outlet valve (3), and wherein for each cylinder (2) an exhaust gas conditioning (8910) comprising a catalytic converter (8) and a bypass line (9) as well as a switchover device (10) is provided, and in the operating state, the exhaust gas (7) is supplied from the combustion space (4)) to the exhaust gas manifold (11) alternatively via the catalytic converter (8) or via the bypass line (9) by means of the switchover device (10), **characterized in that** each exhaust gas conditioning (8910) is provided between one of the cylinders (2) and the exhaust gas manifold (11) such that the exhaust gas (7) is supplied from the combustion space (4) to the exhaust gas manifold (11) via the exhaust gas conditioning (8910).

9. A method in accordance with claim 8, wherein the reciprocating piston internal combustion engine (1) is a two-stroke engine or a four-stroke engine, in particular a large uniflow-scavenged two-stroke diesel engine.

10. A method in accordance with claim 8 or 9, wherein the exhaust gas (7) is conducted in the gas mode via the catalytic converter (8) by means of the switchover device (10) and the exhaust gas (7) is conducted in the liquid mode via the bypass line (9) by means of the switchover device (10) bypassing the catalytic converter (8) and/or wherein a methane oxidation catalytic converter is used as the catalytic converter (8), in particular a methane oxidation catalytic converter with which formaldehyde can be oxidized.

## Revendications

1. Un moteur à combustion interne alternatif conçu comme un moteur à deux carburants, qui peut fonctionner aussi bien avec du gaz qu'avec un combustible liquide, en particulier avec un gaz et un carburant diesel ou un pétrole lourd, comprenant une pluralité de cylindres (2), dans lequel chaque cylindre (2) est pourvu d'une vanne de sortie (3), et un piston (5) délimitant une chambre de combustion (4) sur un côté, lequel piston est disposé dans le cylindre (2) en va-et-vient entre un point mort supérieur (OT) et un point mort inférieur (UT), dans lequel un tube collecteur de gaz d'échappement (11) est prévu, à lequel le gaz d'échappement (7) peut être amené de tous les cylindres (2) par la vanne de sortie (3) correspondante, et dans lequel un traitement des gaz d'échappement (8910) comprenant un catalyseur de gaz d'échappement (8) et une conduite de dérivation (9) et un dispositif de commutation (10) est prévu pour chaque cylindre (2) de sorte que le gaz d'échappement (7) peut être amené de la chambre de combustion (4) au tube collecteur de gaz d'échappement (11) alternativement via le catalyseur de gaz d'échappement (8) ou via la conduite de dérivation (9) au moyen du dispositif de commutation (10), **caractérisé en ce que** chaque traitement de gaz d'échappement (8910) est prévu respectivement entre l'un des cylindres (2) et le tube collecteur de gaz d'échappement (11) de sorte que le gaz d'échappement (7) peut être amené de la chambre de combustion (4) au tube collecteur de gaz d'échappement (11) via le traitement de gaz d'échappement (8910).

2. Un moteur à combustion interne alternatif selon la revendication 1, dans lequel le seul et même traitement de gaz d'échappement (8910) est associé à au moins deux cylindres (2) simultanément.

3. Un moteur à combustion interne alternatif selon l'une des revendications précédentes, dans lequel le moteur à combustion interne alternatif est un moteur à deux temps ou un moteur à quatre temps, en particulier un grand moteur diesel à deux temps purgé longitudinalement

4. Un moteur à combustion interne alternatif selon l'une des revendications précédentes, dans lequel le catalyseur de gaz d'échappement (8) est un catalyseur d'oxydation du méthane, en particulier un catalyseur d'oxydation du méthane, avec lequel le formaldéhyde peut également être oxydé.

5. Un moteur à combustion interne alternatif selon la revendication 4, dans lequel le catalyseur d'oxydation du méthane comprend du palladium pour améliorer l'oxydation du méthane.

6. Un moteur à combustion interne alternatif selon l'une des revendications précédentes, dans lequel le catalyseur de gaz d'échappement (8) est situé dans une ou dans plusieurs passages de gaz à l'intérieur de la conduite de dérivation (9) et peut être commuté entre les possibilités d'écoulement de gaz d'échappement possibles au moyen du dispositif de commutation (10) et / ou dans lequel la conduite de dérivation (9) est situé dans une ou dans plusieurs passages de gaz à l'intérieur du catalyseur de gaz d'échappement (8) et peut être commuté entre les possibilités d'écoulement de gaz d'échappement possibles au moyen du dispositif de commutation (10).

7. Un moteur à combustion interne alternatif selon l'une des revendications précédentes, dans lequel le dispositif de commutation (10) comprend une valve réglable de sorte que le gaz d'échappement (7) peut être dévié alternativement à travers le catalyseur de gaz d'échappement (8) ou à travers la conduite de dérivation (9).

8. Un procédé de fonctionnement d'un moteur à combustion interne alternatif (1), qui, dans un premier état de fonctionnement, est actionné par un gaz en mode gaz et, dans un second état de fonctionnement, est actionné par un combustible liquide en mode liquide, en particulier avec un carburant diesel ou un pétrole lourd, comprenant une pluralité de cylindres (2), dans lequel chaque cylindre (2) est pourvu d'une vanne de sortie (3), et un piston (5) délimitant une chambre de combustion (4) sur un côté, lequel piston est disposé dans le cylindre (2) en va-et-vient entre un point mort supérieur (OT) et un point mort inférieur (UT), dans lequel un tube collecteur de gaz d'échappement (11) est prévu, à lequel le gaz d'échappement (7) est amené de tous les cylindres (2) par la vanne de sortie (3) correspondante, et dans lequel un traitement de gaz d'échappement (8910) comprenant un catalyseur de gaz d'échappement (8) et une conduite de dérivation (9) et un dispositif de commutation (10) est prévu pour chaque cylindre (2), et dans l'état de fonctionnement, le gaz d'échappement (7) est amené de la chambre de combustion (4) au tube collecteur de gaz d'échappement (11) alternativement via le catalyseur de gaz d'échappement (8) ou via la conduite de dérivation (9) au moyen du dispositif de commutation (10), **caractérisé en ce que** chaque traitement de gaz d'échappement (8910) est prévu respectivement entre l'un des cylindres (2) et le tube collecteur de gaz d'échappement (11) de sorte que le gaz d'échappement (7) est amené de la chambre de combustion (4) au tube collecteur de gaz d'échappement (11) via le traitement des gaz d'échappement (8910).

9. Un procédé selon la revendication 8, dans lequel le moteur à combustion interne alternatif (1) est un moteur à deux temps ou un moteur à quatre temps, en particulier un grand moteur diesel à deux temps purgé longitudinalement.

10. Un procédé selon la revendication 8 ou 9, dans lequel, en mode gaz, le gaz d'échappement (7) est conduit via le catalyseur de gaz d'échappement (8) au moyen du dispositif de commutation (10) et en mode liquide, le gaz d'échappement (7) est conduit via la conduite de dérivation (9) au moyen du dispositif de commutation (10) en évitant le catalyseur de gaz d'échappement (8) et / ou dans lequel un catalyseur d'oxydation du méthane est utilisé comme catalyseur de gaz d'échappement (8), en particulier un catalyseur d'oxydation du méthane, avec lequel le formaldéhyde peut également être oxydé.
